# EUROPÄISCHE PATENTSCHRIFT

(11) **EP 3 577 733 B1**
(45) Veröffentlichungstag und Bekanntmachung des Hinweises auf die Patenterteilung: **26.11.2025**
(21) Anmeldenummer: 18702958.2
(22) Anmeldetag: 29.01.2018
(51) Int. Cl.: H02G 3/08, H01R 13/50, H01R 25/16

(54) **GEHÄUSELEMENT, ELEKTRISCHE LEITUNGSANORDNUNG UND HERSTELLUNGSVERFAHREN DAFÜR**
HOUSING ELEMENT, ELECTRIC LINE ARRANGEMENT, AND PRODUCTION METHOD THEREFOR
ÉLÉMENT DE BOÎTIER, ENSEMBLE DE LIGNES ÉLECTRIQUES ET PROCÉDÉ DE FABRICATION CORRESPONDANT

(30) Priorität: 03.02.2017 DE 102017102130
(43) Veröffentlichungstag der Anmeldung: 11.12.2019
(73) Patentinhaber: Lisa Dräxlmaier GmbH, 84137 Vilsbiburg (DE)
(72) Erfinder: WIMMER, Wolfgang, 94330 Salching (DE); STÖCKL, Thomas, 84076 Pfeffenhausen (DE)
(86) Internationale Anmeldenummer: PCT/EP2018/052056
(87) Internationale Veröffentlichungsnummer: WO 2018/141668

(56) Entgegenhaltungen:
- EP-A1- 3 339 104
- DE-A1- 102011 089 978
- DE-A1- 102016 107 080
- DE-A1- 102016 116 563

## Beschreibung

### Technisches Gebiet

Die vorliegende Erfindung betrifft ein Gehäuseelement zur Anbringung an einer elektrischen Flachleiterschiene. Ferner bezieht sich die Erfindung auf eine elektrische Leitungsanordnung für ein Fahrzeug mit einer Flachleiterschiene sowie einem Gehäuse für ein elektrisches Kontaktteil und ein Verfahren zum Herstellen einer solchen Leitungsanordnung.

### Stand der Technik

Aus dem Stand der Technik sind bereits Gehäuseelemente für elektrische Leitungsanordnungen mit einer im Wesentlichen formstabilen Flachleiterschiene zum Einsatz in einem Fahrzeug bekannt.

Eine solche Flachleiterschiene kann z.B. gemäß der nachveröffentlichten DE 10 2015 220 115 A1 z.B. als ein Teil eines zentralen elektrischen Energieversorgungssystems durch ein Fahrzeug verlegt sein. Beispielsweise kann sich die Flachleiterschiene als Masse- oder Versorgungsleiter zwischen einem Front- und Heckbereich des Fahrzeugs erstrecken, wobei zur Anbindung elektrischer Lasten des Fahrzeugs an der Flachleiterschiene seitliche, also quer zur Längserstreckungsrichtung der Flachleiterschiene abstehende, Abgriffe mit elektrischen Kontaktteilen angeordnet sind. Über diese Kontaktteile kann also eine Masserückführung zum z.B. Massepol einer Fahrzeugbatterie von den Lasten oder eine Versorgung der Lasten durch z.B. die Fahrzeugbatterie, einen Fahrzeuggenerator, einen Gleichspannungswandler oder ähnliches erfolgen.

So beschreibt beispielsweise die nachveröffentlichte DE 10 2016 116 563 A1 ein Gehäuseelement als Teil eines Gehäuses, in dem eine als Flachleiterschiene ausgestalteter elektrischer Leiter sowie ein die Flachleiterschiene kontaktierendes Kontaktteil aufgenommen werden können. Das Gehäuse verfügt über einen Gehäusedeckel und ein als Gehäusebasis vorgesehenes Gehäuseelement, die über ein Scharnier schwenkbar miteinander verbunden sind. Zur Kontaktierung des Kontaktteils wird ein Leiter zu dem Kontaktteil in das Gehäuse geführt und dort direkt mit dem Kontaktteil verbunden.

Des Weiteren ist aus der nachveröffentlichten DE 10 2016 103 439 A1 ein anderes Gehäuse bekannt, bei dem ein Kontaktteil, das mit einer Flachleiterleiterschiene in einem Anschlussbereich verbunden ist, in einem mehrschaligen Gehäuse angeordnet ist. Das Gehäuse ist wiederum an der Flachleiterschiene befestigt. Auch hier wird ein z.B. biegeschlaffer Leiter wiederum in das Gehäuse geführt und dort direkt mit dem Kontaktteil verbunden.

Da die Flachleiterschienen immer häufiger als zentrales Energieversorgungssystem im Fahrzeug verwendet werden, müssen entsprechend häufiger elektrische Leitungen zum Zwecke einer Kontaktierung zu der Flachleiterschiene geführt werden. Hierbei wäre es jedoch wünschenswert, bestehende Steckverbinder-Ausführungen, die bislang biegeschlaffe Leitungen verbunden haben, auch mit Flachleiterschienen weiterverwenden zu können.

Die DE 10 2011 089 978 A1 offenbart einen elektrischen Steckverbinder mit einem elektrisch leitenden Gehäuse.

Die DE 10 2016 107 080 A1 offenbart eine elektrische Leitungsanordnung für ein Fahrzeug, mit wenigstens einer elektrisch leitfähigen Flachleiterschiene.

Die EP 3 339 104 A1 offenbart einen Stromtransportmechanismus wobei der Stromtransportmechanismus einen länglichen, elektromechanischen Grundleiter mit einer ihn in Umfangsrichtung umgebenden elektrischen Isolierung umfasst.

### Beschreibung der Erfindung

Eine Aufgabe der Erfindung ist es daher, unter Einsatz konstruktiv möglichst einfacher Mittel eine Möglichkeit zu schaffen, bestehende Steckverbinder-Ausführungen mit einer Flachleiterschiene verbinden zu können.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Ein erfindungsgemäßes Gehäuseelement zur Anbringung an einer elektrischen Flachleiterschiene ist aus einem Kunststoffmaterial spritzgegossen und ist insbesondere als Gehäusebasis, also eine Art Gehäuseunterteil, geeignet. Es verfügt über eine sich entlang einer ersten Richtung erstreckende Flachleiteraufnahme, die beispielsweise U-förmig ausgestaltet ist und im Einbauzustand die Flachleiterschiene aus einer Richtung quer zur Längserstreckungsrichtung der Flachleiterschiene zumindest teilweise umgreift. Die erste Richtung ist parallel zur Längserstreckungsrichtung der Flachleiterschiene. In einer zweiten Richtung, die quer zur ersten Richtung und damit quer zur Längserstreckungsrichtung der Flachleiterschiene ist, erstreckt sich ein Steckverbinderflansch des Gehäuseelements zum Aufstecken und Befestigen eines Steckverbinders von der Flachleiteraufnahme weg. Der Steckverbinderflansch ist durch eine Wandung von der Flachleiteraufnahme getrennt und weist einen innenliegenden, d.h. von dem Kunststoffmaterial umgebenen, sowie vorzugsweise buchsenförmigen Kontaktteilaufnahmeraum auf. Zwischen der Flachleiteraufnahme und dem Kontaktteilaufnahmeraum ist durch das Kunststoffmaterial eine Wandung ausgebildet, in der eine Durchgangsöffnung angeordnet ist, die zum Hindurchführen eines sich im Einbauzustand zwischen der Flachleiteraufnahme und dem Kontaktteilaufnahmeraum erstreckenden elektrischen Kontaktteils die Flachleiteraufnahme und den Kontaktteilaufnahmeraum miteinander verbindet. Das Kontaktteil kann beispielsweise ein Bimetall-Kontaktteil sein, das flachleiterschienenseitig z.B. einen Aluminiumwerkstoff sowie steckverbinderseitig einen Kupferwerkstoff aufweist und im Wesentlichen plättchenförmig ausgestaltet sein kann. Steckverbinderseitig ist vorzugsweise eine Steckzunge ausgebildet, die ggf. eine geringere Querschnittsgröße aufweisen kann als der flachleiterschienenseitige Teil des Kontaktteils. Die Steckzunge kann dann dem direkten Anstecken eines Gegensteckkontakts eines Steckverbinders dienen.

Die Erfindung ermöglicht durch den Steckverbinderflansch eine Kontaktierung der Flachleiterschiene unter Zuhilfenahme bestehender Steckverbinder. Anders als im eingangs genannten Stand der Technik wird also nicht mehr ein mit dem Kontaktteil zu verbindender Leiter in das Gehäuse geführt und dort direkt mit dem Kontaktteil verbunden. Vielmehr ist das Gehäuse nach außen abgeschlossen, bietet aber eine Steckverbinder-Schnittstelle zur Kontaktierung über den Steckverbinderflansch. Zudem wird durch die durch die Wandung erreichte räumliche Trennung von Flachleiteraufnahme und Kontaktteilaufnahme eine gute Abdichtbarkeit des Gehäuseelements ermöglicht. Als Spritzgussteil lässt sich das Gehäuseelement einfach fertigen, wobei die Durchgangsöffnung durch Schieber oder ähnliches gleich mit ausgeformt werden kann.

Eine besonders vorteilhafte Weiterbildung sieht zur Abdichtung des Gehäuselements vor, dass an dem Gehäuseelement eine Dichtung, z.B. aus einem weiteren, vergleichsweise weicheren Kunststoffmaterial, angeordnet ist. Diese Dichtung kann im Einbauzustand um die Flachleiteraufnahme und die Durchgangsöffnung derart umlaufen, dass das Kontaktteil innerhalb der Dichtung angeordnet ist. Das heißt, dass auch die Durchgangsöffnung innerhalb der Dichtung angeordnet ist. Zusätzlich kann aber an dem Steckverbinder eine steckverbinderseitige Dichtung, z.B. eine Ringdichtung, angeordnet sein, die den Kontaktierungsbereich zwischen freiem Ende des Kontaktteils und Steckverbinder-Kontaktteil abdichtet. Beim Aufstecken des Steckverbinders ist die steckverbinderseitige Dichtung dann gleich richtig positioniert.

Für eine einfache Fertigung hat es sich als vorteilhaft erwiesen, wenn die Dichtung an das Kunststoffmaterial des Gehäuseelements angespritzt ist. Dies kann z.B. in einem Mehrkomponenten-Spritzgussverfahren erfolgen.

Wenn das Kontaktteil plättchenförmig ausgeführt ist, kann die Durchgangsöffnung vorteilhafterweise schlitzförmig ausgebildet sein. Vorzugsweise ist der Schlitz ungefähr so breit und dick wie das Blechmaterial der steckverbinderseitigen Steckzunge, die im Einbauzustand mit einem Gegenkontaktteil des Steckverbinders verbunden werden soll.

Die Flachleiterschiene kann im Fahrzeug auch auf einem Fahrzeugbauteil aufliegend verlegt werden. Der Kontaktteilaufnahmeraum ist gegenüber der Flachleiteraufnahme gekröpft, also in Dickenrichtung des Gehäuseelements höhenversetzt, ist. Dadurch kann der Steckverbinderflansch zu dem Fahrzeugteil, z.B. einem Boden des Fahrzeugs, beabstandet werden, so dass der Steckverbinder ohne mit dem Fahrzeugteil in Berührung zu kommen, montiert werden kann.

Das Gehäuseelement kann auch nur einen Teil eines Gehäuses darstellen, der z.B. durch einen komplementär ausgebildeten Gehäusedeckel ergänzt wird. Hierbei kann auf einer dem Kontaktteilaufnahmeraum abgewandten Seite der Flachleiteraufnahme wenigstens ein Scharnierabschnitt zum Verbinden mit einem Gehäusedeckel ausgebildet sein. Der Scharnierabschnitt bildet dann einen Schenkel der oben erwähnten U-Form des Gehäuselements.

Zum Verbinden mit dem Gehäusedeckel hat es sich als vorteilhaft erwiesen, wenn auf einer dem Kontaktteilaufnahmeraum zugewandten Seite der Flachleiteraufnahme wenigstens ein Befestigungsabschnitt zum Verclipsen mit dem Gehäusedeckel ausgebildet ist. Der Befestigungsabschnitt kann dann abschnittsweise den anderen Schenkel der U-Form des Gehäuseelements ausbilden. Durch den Befestigungsabschnitt kann sich im Einbauzustand das Kontaktteil hindurch erstrecken, wozu idealerweise die Flachleiteraufnahme in den Befestigungsabschnitt und anschließend daran in die Durchgangsöffnung mündet.

Der Gehäusedeckel kann, alternativ dazu, aber auch über ein Filmscharnier mit dem anderen Gehäuseelement verbunden sein. Damit ist auch eine einstückige Ausführung der beiden Elemente möglich.

Die Erfindung bezieht sich auch auf eine elektrische Leitungsanordnung für ein Fahrzeug. Diese verfügt über wenigstens eine, insbesondere aufgrund eines massiven Kerns aus einem Aluminiumwerkstoff, formstabile Flachleiterschiene als Masse- oder Versorgungsleiter. Zudem weist sie ein als Gehäusebasis vorgesehenes Gehäuseelement auf, an dem eine sich entlang einer ersten Richtung erstreckende, die Flachleiterschiene umgreifende Flachleiteraufnahme, ein Steckverbinderflansch, der sich in einer zweiten Richtung quer zur ersten Richtung erstreckt, der ferner durch eine Wandung von der Flachleiteraufnahme getrennt ist und ein innenliegender Kontaktteilaufnahmeraum einstückig damit ausgeformt sind. In der Wandung ist eine Durchgangsöffnung ausgebildet, die die Flachleiteraufnahme und den Kontaktteilaufnahmeraum miteinander verbindet und durch die ein mit der Flachleiterschiene verbundenes, sich zwischen der Flachleiteraufnahme und dem Kontaktteilaufnahmeraum erstreckendes elektrisches Kontaktteil geführt ist. Das Kontaktteil ist vorzugsweise auf eine Flachseite der Flachleiterschiene geschweißt, könnte aber auch seitlich an der Flachleiterschiene, nicht überlappend angeschweißt werden, und stellt so eine elektrische Verbindung zwischen der Flachleiterschiene und einem an dem Steckverbinderflansch anbringbaren Steckverbinder her. Des Weiteren weist die Leitungsanordnung einen Gehäusedeckel auf, der über einen Scharnierabschnitt, der an einer dem Kontaktteilaufnahmeraum abgewandten Seite der Flachleiteraufnahme angeordnet ist, an dem Gehäuseelement angelenkt ist.

Die Leitungsanordnung lässt sich auf einfache Weise fertigen und ermöglicht eine gute Abdichtung der Kontaktierung bzw. des Kontaktteils. Sie ermöglicht durch den Steckverbinderflansch auch eine Kontaktierung der Flachleiterschiene unter Zuhilfenahme bestehender Steckverbinder, ohne dass ein Leiter zu dem Kontaktteil in das Gehäuse geführt werden muss. Vielmehr kann das Gehäuse in sich geschlossen sein, da die Kontaktierung zwischen Leiter und Flachleiterschiene über den Steckverbinderflansch stattfindet.

In einer besonders vorteilhaften Ausführungsvariante können das Gehäuseelement und/oder der Gehäusedeckel eine Dichtung aufweisen, die um die Flachleiteraufnahme und die Durchgangsöffnung derart umläuft, dass das Kontaktteil innerhalb der Dichtung angeordnet ist. Das Kontaktteil befindet sich also in einem abgedichteten Trockenbereich des durch Gehäuseelement und Gehäusedeckel gebildeten Gehäuses.

Die Erfindung bezieht sich ferner auf ein Verfahren zum Herstellen bzw. Montieren einer elektrischen Leitungsanordnung für ein bzw. in einem Fahrzeug. Das Verfahren sieht die folgenden Schritte vor:
Zunächst wird ein elektrisches Kontaktteil an einer formstabilen Flachleiterschiene angebracht, beispielsweise durch ein Schweißverfahren. Die Flachleiterschiene ist primär zur Gewichtseinsparung vorzugsweise aus einem Aluminiumwerkstoff gefertigt. Das Kontaktteil kann aus einem Bimetall gefertigt sein, von dem ein freies Ende aus einem plättchenförmigen Aluminiumwerkstoff und ein weiteres freies Ende aus einem plättchenförmigen Kupferwerkstoff gefertigt sind. Zudem wird ein als Gehäusebasis vorgesehenes Gehäuseelement mit einer sich entlang einer ersten Richtung erstreckenden Flachleiteraufnahme sowie einem Steckverbinderflansch bereitgestellt, der sich in einer zweiten Richtung quer zur ersten Richtung erstreckt und durch eine Wandung von der Flachleiteraufnahme getrennt ist. Das Gehäuseelement mitsamt der Wandung ist aus einem Kunststoffmaterial gefertigt. Nach dem Anbringen des Kontaktteils mit seinem einen freien Ende wird das der Flachleiterschiene abgewandte Ende durch eine in der Wandung angeordnete Durchgangsöffnung hindurch geführt bzw. gefädelt. Dann wird das Gehäuseelement derart an der Flachleiterschiene angeordnet, dass es die Flachleiterschiene zumindest teilweise umgreift. Dabei können z.B. ein Scharnierabschnitt des Gehäuselements auf der einen (Quer-)Seite der Flachleiterschiene und ein Befestigungsabschnitt des Gehäuselements auf der anderen (Quer-)Seite der Flachleiterschiene angeordnet sein. Zum Schutz und ggf. Abdichtung des Kontaktteils bzw. der Kontaktierung zwischen Flachleiterschiene und Kontaktteil wird ein Gehäusedeckel an dem Gehäuseelement derart angebracht, dass die Flachleiterschiene und/oder das Kontaktteil bzw. die Kontaktierung zumindest abschnittsweise zwischen Gehäusedeckel und Gehäuseelement aufgenommen sind.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: eine erfindungsgemäße elektrische Leitungsanordnung mit einem erfindungsgemäßen Gehäuseelement in einer perspektivischen Ansicht,
- Figur 2: eine erfindungsgemäße elektrische Leitungsanordnung mit einem erfindungsgemäßen Gehäuseelement in einer perspektivischen Ansicht, bei der zur besseren Veranschaulichung ein Gehäusedeckel ausgeblendet ist,
- Figur 3: eine erfindungsgemäße elektrische Leitungsanordnung mit einem erfindungsgemäßen Gehäuseelement in einer perspektivischen Ansicht, bei der zur besseren Veranschaulichung ein Gehäusedeckel ausgeblendet ist, und
- Figur 4: eine weitere Ausführungsform einer erfindungsgemäßen elektrische Leitungsanordnung mit einem erfindungsgemäßen Gehäuseelement in einer perspektivischen Ansicht, bei der zur besseren Veranschaulichung ein Gehäusedeckel ausgeblendet ist.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

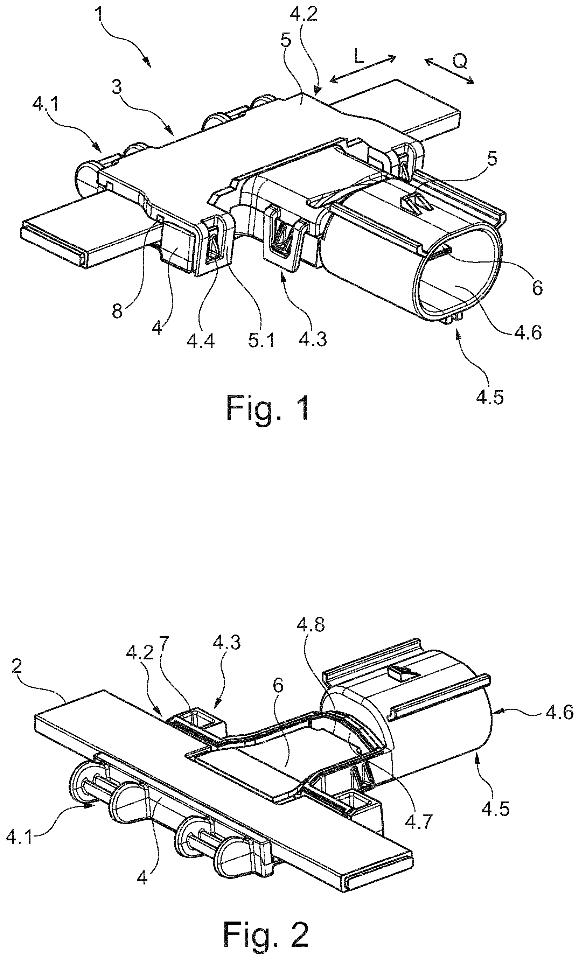

Figur 1 zeigt eine elektrische Leitungsanordnung 1 für ein Fahrzeug, insbesondere für ein Kraftfahrzeug, in einer perspektivischen Ansicht. Als Strom- oder Masseleiter ist eine im Wesentlichen formstabile, insbesondere massiv ausgestaltete, Flachleiterschiene 2 vorgesehen, die z.B. einen Hauptleitungsstrang eines zentralen Energieversorgungssystems des Fahrzeugs bildet.

Die Flachleiterschiene 2 weist einen im Wesentlichen massiven Kern aus einem Aluminiumwerkstoff auf, der mit einem (nicht näher bezeichneten) elektrisch isolierenden Isoliermantel umgeben ist. Typischerweise hat eine solche Flachleiterschiene 2 eine Breite von etwa 10 mm bis etwa 60 mm, vorzugsweise von etwa 30 mm bis etwa 60 mm. Um ausreichend hohe Ströme übertragen zu können ist es von Vorteil, wenn die Flachleiterschiene 2 eine Höhe von etwa 0,8 mm bis etwa 5 mm, vorzugsweise von etwa 1 mm bis etwa 2 mm, aufweist. Mit solchen Abmessungen ist die Flachleiterschiene 2 eher starr und damit formstabil.

Die Leitungsanordnung 1 weist zudem ein aus einem Kunststoff gefertigtes, z.B. spritzgegossenes, Gehäuse 3 auf, das sich aus zwei zueinander komplementären Gehäuseelementen 4 und 5 zusammensetzt. Das erste Gehäuseelement 4 ist eine Gehäusebasis, die die Flachleiterschiene 2 teilweise umgreift und im Folgenden als Gehäusebasis 4 bezeichnet wird. Das zweite Gehäuseelement 5 ist ein Gehäusedeckel, der die umgriffene Flachleiterschiene 2 abdeckt und im Folgenden als Gehäusedeckel 5 bezeichnet wird. Gehäusebasis 4 und Gehäusedeckel 5 sind über einen Scharnierabschnitt 4.1 der Gehäusebasis 4 schwenkbar miteinander verbunden, wozu der Scharnierabschnitt 4.1 (nicht näher bezeichnete) Scharnierzapfen aufweist, in die Scharnierbügel des Gehäusedeckels 5 eingreifen. Der Bereich 4.1 kann auch als Filmscharnier aufgeführt werden, womit die Gehäuseelemente 4 und 5 miteinander verbunden wären.

Die Gehäusebasis 4 verfügt über eine angeformte, U-förmige Flachleiteraufnahme 4.2, in der die Flachleiterschiene 2 flach liegend aufgenommen ist. In Längserstreckungsrichtung L der Flachleiterschiene 2 ist die Flachleiteraufnahme 4.2 auf der einen Querseite durch den Scharnierabschnitt 4.1 und auf der anderen Querseite durch einen Befestigungsabschnitt 4.3 bzw. durch deren Kunststoffwandung begrenzt. Im Befestigungsabschnitt 4.3 sind mehrere Rastnasen 4.4 ausgebildet, die im in Figur 1 gezeigten Einbauzustand mit Rastlaschen 5.1 des Gehäusedeckels 5 in Eingriff stehen und so eine Verclipsung ausbilden. In einer Richtung quer zur Längserstreckungsrichtung L weist die Gehäusebasis 4 zudem einen angeformten Steckverbinderflansch 4.5 auf, der zum Aufstecken und Befestigen eines (nicht dargestellten) Steckverbinders eingerichtet ist. Der Steckverbinderflansch 4.5 verfügt beispielsweise über (nicht näher bezeichnete) Führungsnasen oder -stege sowie über Rastnasen, um den Steckverbinder beim Aufstecken zu führen und zu verrasten. Es ist außerdem erkennbar, dass das Kunststoffmaterial des Steckverbinderflansches 4.5 einen Kontaktteilaufnahmeraum 4.6 ausbildet, bei dem es sich im Prinzip um einen Hohlraum handelt, in dem ein Teilabschnitt eines elektrischen Kontaktteils 6 untergebracht ist. Der Kontaktteilaufnahmeraum 4.6 und die Flachleiteraufnahme 4.2 sind durch eine angeformte Wandung 4.7 voneinander getrennt, die durch das Kunststoffmaterial gebildet ist. Die Wandung 4.7 weist eine schlitzförmige Durchgangsöffnung 4.8 (siehe Figur 2) auf, die einerseits in die Flachleiteraufnahme 4.2 und andererseits in den Kontaktteilaufnahmeraum 4.6 mündet, so dass diese über die Durchgangsöffnung 4.8 miteinander verbunden sind.

In Figur 2 ist die Leitungsanordnung 1 zur besseren Illustration ohne den Gehäusedeckel 5 dargestellt. Dadurch ist das innerhalb des Gehäuses 3 aufgenommene Kontaktteil 6 besser zu erkennen, das hier aus einem Bimetall mit einem Aluminium- und einem Kupferwerkstoff gefertigt ist. Es erstreckt sich quer zu der Längserstreckungsrichtung L, in einer Querrichtung Q, von der Flachleiterschiene 2 weg und bildet dadurch einen seitlichen Abgriff der Flachleiterschiene 2. Das Aluminium aufweisende freie Ende des Kontaktteils 6 ist mit einer Flachseite der Flachleiterschiene 2 stoffschlüssig, z.B. durch Ultraschallschweißen, verbunden. Das gegenüberliegende, Aluminium aufweisende freie Ende des Kontaktteils 6 erstreckt sich quer zur Längserstreckungsrichtung L entlang der Gehäusebasis 4 bis hin zum Kontaktteilaufnahmeraum 4.6 durch die Durchgangsöffnung 4.8 der Wandung 4.7 hindurch. Flachleiterseitig, also im Bereich der Flachleiteraufnahme 4.2 ist das Kontaktteil 6 hier breiter als steckverbinderseitig, also im Bereich des Kontaktteilaufnahmeraums 4.6, wobei die schlitzförmige Durchgangsöffnung 4.8 ungefähr die Breite des schmaleren Abschnitts aufweist. Dadurch bildet die Wandung 4.7 einen Anschlag für den breiteren Abschnitt des Kontaktteils 6. Die Geometrie, also Stärke bzw. Dicke und Breite, des schmaleren Abschnitts des Kontaktteils 6 ist auf gängige Steckkontaktgeometrien abgestimmt und beträgt z.B. 6,3 mm. Alternativ dazu kann das Kontaktteil bei größeren Leiterquerschnitten auch die gleiche Breite aufweisen.

Aus Figur 2 geht auch hervor, dass an der Gehäusebasis 4 eine erste Dichtung 7 aus einem Weichkunststoff angeordnet ist. Die Dichtung 7 ist um die Flachleiteraufnahme 4.2 und die Durchgangsöffnung 4.8 umlaufend ausgebildet, so dass das Kontaktteil 6 bis zur Wandung 4.7 innerhalb der Dichtung 7 angeordnet ist und so vor dem Eintrag von Schmutz oder Wasser geschützt ist. Die Dichtung 7 liegt im Einbauzustand auch an einer (in Figur 2 unteren) Flachseite der Flachleiterschiene 2 an, so dass die Flachleiteraufnahme 4.2 auch in Längserstreckungsrichtung L der Flachleiterschiene 2 abgedichtet ist. Eine komplementär verlaufende, zweite Dichtung 8 ist an dem Gehäusedeckel 5 angeordnet, die also im Einbauzustand an einer (in Figur 2 oberen) Flachseite der Flachleiterschiene 2 bzw. an deren Isolationsmantel anliegt. Die Dichtungen 7, 8 sind im Mehrkomponenten-Spritzgussverfahren an das ggf. unterschiedliche Kunststoffmaterial der Gehäuseelemente 4, 5 angespritzt.

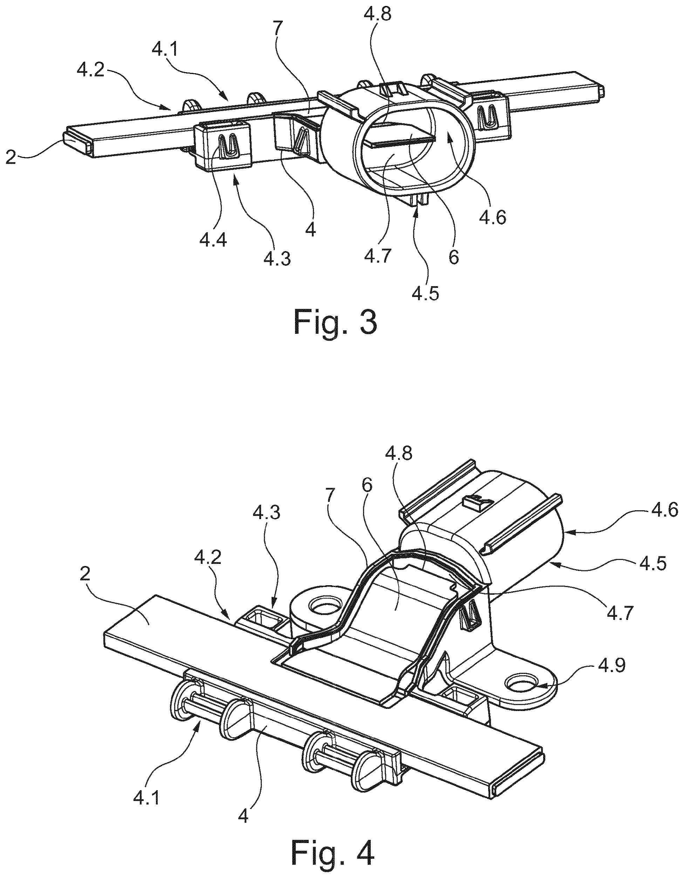

In Figur 3, die die Leitungsanordnung aus Figur 2 aus einer anderen Perspektive zeigt, ist zu erkennen, dass das Kontaktteil 6 im Bereich des Kontaktteilaufnahmeraums 4.6 als Steckzunge ausgebildet ist, die sich zur steckenden Kontaktierung mit einem Gegenkontaktteil in den Kontaktteilaufnahmeraum 4.6 hinein erstreckt. Zudem sind die Führungsnasen oder -stege sowie die Rastnasen nochmals besser zu erkennen.

In Figur 4 ist eine weitere Ausführungsform der Leitungsanordnung 1 gezeigt, bei der der Steckverbinderflansch 4.5 bzw. der Kontaktteilaufnahmeraum 4.6 gegenüber der Flachleiteraufnahme 4.2 in Dickenrichtung bzw. Höhenrichtung der Gehäusebasis 4 gekröpft, also höhenversetzt ist. Dies ermöglicht bei z.B. bodennahem Einbau der Leitungsanordnung 1 im Fahrzeug ein problemloses Aufstecken des Steckverbinders auf den Steckverbinderflansch 4.5. Dementsprechend ist das Kontaktteil 6 nicht gerade, sondern ebenfalls gekröpft ausgebildet. Zudem geht aus Figur 4 hervor, dass die Gehäusebasis 4 über zwei Befestigungsflansche 4.9 verfügt, die sich parallel zur Längserstreckungsrichtung L der Flachleiterschiene 2 von dem Befestigungsabschnitt 4.3 weg erstrecken. Darüber kann das Gehäuse 3 z.B. schraubend an dem Fahrzeug befestigt werden.

Die Leitungsanordnung 1 kann wie nachfolgend beschrieben hergestellt bzw. montiert werden.

Zunächst werden die Flachleiterschiene 2 sowie das Kontaktteil 6 bereitgestellt, wozu das Kontaktteil 6 z.B. durch Walzplattieren und die Flachleiterschiene 2 beispielsweise durch Extrudieren gefertigt werden. Zusätzlich wird die Flachleiterschiene 2 optional mit dem Isolationsmantel versehen. Im Kontaktbereich zwischen diesen beiden Kontaktpartnern wird die Flachleiterschiene 2 entweder abisoliert oder der Isolationsmantel wurde dort ausgespart. Dann wird das Kontaktteil 6 mit einer Flachseite auf eine Flachseite der Flachleiterschiene 2 aufgeschweißt, was z.B. durch Laserschweißen erfolgen kann.

Dann wird zumindest das als Gehäusebasis vorgesehene erste Gehäuseelement 4 mit der Flachleiteraufnahme 4.2 sowie dem Steckverbinderflansch 4.5 bereitgestellt. Beim Anbringen der Gehäusebasis 4 an der Flachleiterschiene 2 wird zunächst das nicht verbundene freie Ende des Kontaktteils 6, das als Steckzunge ausgebildet ist, in die Durchgangsöffnung 4.8 eingeführt, das dann in den Kontakteilaufnahmeraum 4.6 hineinragt und dort von einem Gegenkontaktteil eines Steckverbinders kontaktiert werden kann. Dann wird das dem Steckverbinderflansch 4.5 entgegengesetzte Ende der Gehäusebasis, an dem der Scharnierabschnitt 4.1 ausgebildet ist, so um die Flachleiterschiene 2 herum angeordnet, dass die Flachleiterschiene 2 mit einer Flachseite auf der Flachleiteraufnahme 4.2 aufliegt und die beiden Schmalseiten der Flachleiterschiene 2 umgriffen sind.

Danach wird der Gehäusedeckel 5 schwenkbar an dem Scharnierabschnitt 4.1 durch Verclipsen der Scharnierhaken mit den Scharnierzapfen angebracht und am Befestigungsabschnitt 4.3 durch Verclipsen der Rastzungen mit den Rasthaken in einen geschlossenen Zustand, dem Einbauzustand, verschlossen.

### BEZUGSZEICHENLISTE

- 1: Elektrische Leitungsanordnung
- 2: Flachleiterschiene
- 3: Gehäuse
- 4: Erstes Gehäuseelement (z.B. Gehäusebasis)
- 4.1: Scharnierabschnitt
- 4.2: Flachleiteraufnahme
- 4.3: Befestigungsabschnitt
- 4.4: Rastnase
- 4.5: Steckverbinderflansch
- 4.6: Kontaktteilaufnahmeraum
- 4.7: Wandung
- 4.8: Durchgangsöffnung
- 4.9: Befestigungsflansch
- 5: Zweites Gehäuseelement (z.B. Gehäusedeckel)
- 5.1: Rastlasche
- 6: Elektrisches Kontaktteil (z.B. Steckkontakt)
- 7: Erste Dichtung
- 8: Zweite Dichtung

- L: Längserstreckungsrichtung der Flachleiterschiene 2
- Q: Querrichtung

## Patentansprüche

1. Gehäuseelement (4) zur Anbringung an einer elektrischen Flachleiterschiene (2), mit einer sich entlang einer ersten Richtung (L) erstreckenden Flachleiteraufnahme (4.2), einem Steckverbinderflansch (4.5), der sich in einer zweiten Richtung (Q) quer zur ersten Richtung (L) erstreckt, der ferner durch eine Wandung (4.7) von der Flachleiteraufnahme (4.2) getrennt ist und einen innenliegenden Kontaktteilaufnahmeraum (4.6) aufweist, wobei in dem Kontaktteilaufnahmeraum (4.6) ein elektrisches Kontaktteil (6) untergebracht ist, und einer in der Wandung (4.7) angeordneten Durchgangsöffnung (4.8), die zum Hindurchführen eines sich im Einbauzustand zwischen der Flachleiteraufnahme (4.2) und dem Kontaktteilaufnahmeraum (4.6) erstreckenden elektrischen Kontaktteils (6) die Flachleiteraufnahme (4.2) und den Kontaktteilaufnahmeraum (4.6) miteinander verbindet **dadurch gekennzeichnet, dass** der Kontaktteilaufnahmeraum (4.6) gegenüber der Flachleiteraufnahme (4.2) gekröpft, also in Dickenrichtung des Gehäuseelements (4) höhenversetzt, ist.

2. Gehäuseelement (4) nach Anspruch 1, **gekennzeichnet durch** eine an dem Gehäuseelement (4) angeordnete Dichtung (7, 8), die im Einbauzustand um die Flachleiteraufnahme (4.2) und/oder die Durchgangsöffnung (4.8) derart umläuft, dass das Kontaktteil (6) innerhalb der Dichtung (7) angeordnet ist.

3. Gehäuseelement (4) nach Anspruch 2, **dadurch gekennzeichnet, dass** die Dichtung (7) an ein Kunststoffmaterial des Gehäuseelements (4) angespritzt ist.

4. Gehäuseelement (4) nach einem der vorhergehenden Ansprüche, **dadurch gekennzeichnet, dass** die Durchgangsöffnung (4.8) schlitzförmig ausgebildet ist.

5. Gehäuseelement (4) nach einem der vorhergehenden Ansprüche, **dadurch gekennzeichnet, dass** auf einer dem Kontaktteilaufnahmeraum (4.6) abgewandten Seite der Flachleiteraufnahme (4.2) wenigstens ein Scharnierabschnitt (4.1) zum Verbinden mit einem Gehäusedeckel (5) ausgebildet ist.

6. Gehäuseelement (4) nach einem der vorhergehenden Ansprüche, **dadurch gekennzeichnet, dass** auf einer dem Kontaktteilaufnahmeraum (4.6) zugewandten Seite der Flachleiteraufnahme (4.2) wenigstens ein Befestigungsabschnitt (4.3) zum Verclipsen mit einem Gehäusedeckel (5) ausgebildet ist.

7. Elektrische Leitungsanordnung (1) für ein Fahrzeug, mit wenigstens einer formstabilen Flachleiterschiene (2) als Masse- oder Versorgungsleiter, einem als Gehäusebasis vorgesehenen Gehäuseelement (4) mit einer sich entlang einer ersten Richtung (L) erstreckenden, die Flachleiterschiene (2) umgreifenden Flachleiteraufnahme (4.2), einem Steckverbinderflansch (4.5), der sich in einer zweiten Richtung (Q) quer zur ersten Richtung (L) erstreckt, der ferner durch eine Wandung (4.7) von der Flachleiteraufnahme (4.2) getrennt ist und einen innenliegenden Kontaktteilaufnahmeraum (4.6) aufweist, der gegenüber der Flachleiteraufnahme (4.2) gekröpft, also in Dickenrichtung des Gehäuseelements (4) höhenversetzt, ist, einer in der Wandung (4.7) angeordneten Durchgangsöffnung (4.8), die die Flachleiteraufnahme (4.2) und den Kontaktteilaufnahmeraum (4.6) miteinander verbindet und durch die ein mit der Flachleiterschiene (2) verbundenes, sich zwischen der Flachleiteraufnahme (4.2) und dem Kontaktteilaufnahmeraum (4.6) erstreckendes elektrisches Kontaktteil (6) geführt ist, und einem Gehäusedeckel (5), der über einen Scharnierabschnitt (4.1), der an einer dem Kontaktteilaufnahmeraum (4.6) abgewandten Seite der Flachleiteraufnahme (4.2) angeordnet ist, an dem Gehäuseelement (4) angelenkt ist.

8. Leitungsanordnung (1) nach Anspruch 7, **dadurch gekennzeichnet, dass** das Gehäuseelement (4) und/oder der Gehäusedeckel (5) wenigstens eine Dichtung (7, 8) aufweist, die um die Flachleiteraufnahme (4.2) und/oder die Durchgangsöffnung (4.8) derart umläuft, dass das Kontaktteil (6) innerhalb der Dichtung (7, 8) angeordnet ist.

## Claims

1. Housing element (4) for attachment to an electrical flat conductor rail (2), with a flat conductor receptacle (4.2) extending along a first direction (L), a connector flange (4.5) extending in a second direction (Q) transverse to the first direction (L), further separated from the flat conductor receptacle (4.2) by a wall (4.7) and having an internal contact part receiving space (4.6), wherein an electrical contact part (6) is housed in the contact part receiving space (4.6), and with a through-opening (4.8) arranged in the wall (4.7), which connects the flat conductor receptacle (4.2) and the contact part receiving space (4.6) for passing an electrical contact part (6) extending between the flat conductor receptacle (4.2) and the contact part receiving space (4.6) in the installed state, **characterized in that** the contact part receiving space (4.6) is offset in height relative to the flat conductor receptacle (4.2), namely in the thickness direction of the housing element (4).

2. Housing element (4) according to claim 1, **characterized by** a seal (7, 8) arranged on the housing element (4), which in the installed state surrounds the flat conductor receptacle (4.2) and/or the through-opening (4.8) such that the contact part (6) is arranged within the seal (7).

3. Housing element (4) according to claim 2, **characterized in that** the seal (7) is injection-molded onto a plastic material of the housing element (4).

4. Housing element (4) according to any of the preceding claims, **characterized in that** the through-opening (4.8) is slot-shaped.

5. Housing element (4) according to any of the preceding claims, **characterized in that** at least one hinge section (4.1) for connection with a housing cover (5) is formed on a side of the flat conductor receptacle (4.2) facing away from the contact part receiving space (4.6).

6. Housing element (4) according to any of the preceding claims, **characterized in that** at least one fastening section (4.3) for clipping with a housing cover (5) is formed on a side of the flat conductor receptacle (4.2) facing the contact part receiving space (4.6).

7. Electrical conductor arrangement (1) for a vehicle, with at least one dimensionally stable flat conductor rail (2) as ground or supply conductor, with a housing element (4) provided as a housing base with a flat conductor receptacle (4.2) extending along a first direction (L) and surrounding the flat conductor rail (2), with a connector flange (4.5) extending in a second direction (Q) transverse to the first direction (L), further separated from the flat conductor receptacle (4.2) by a wall (4.7) and having an internal contact part receiving space (4.6) being offset in height relative to the flat conductor receptacle (4.2), namely in the thickness direction of the housing element (4), with a through-opening (4.8) arranged in the wall (4.7), which connects the flat conductor receptacle (4.2) and the contact part receiving space (4.6) and through which an electrical contact part (6) is guided, which electrical contact part (6) is connected to the flat conductor rail (2) and extending between the flat conductor receptacle (4.2) and the contact part receiving space (4.6), and with a housing cover (5) hinged to the housing element (4) via a hinge section (4.1) arranged on a side of the flat conductor receptacle (4.2) facing away from the contact part receiving space (4.6).

8. Conductor arrangement (1) according to claim 7, **characterized in that** the housing element (4) and/or the housing cover (5) has at least one seal (7, 8) surrounding the flat conductor receptacle (4.2) and/or the through-opening (4.8) such that the contact part (6) is arranged within the seal (7, 8).

## Revendications

1. Élément de boîtier (4) pour fixation à un rail conducteur plat électrique (2), avec un logement de conducteur plat (4.2) s'étendant dans une première direction (L), une bride de connecteur (4.5) s'étendant dans une deuxième direction (Q) perpendiculaire à la première direction (L), séparée en outre du logement de conducteur plat (4.2) par une paroi (4.7) et ayant un espace de réception de pièce de contact interne (4.6), dans lequel une pièce de contact électrique (6) est logée, et une ouverture traversante (4.8) disposée dans la paroi (4.7), qui relie le logement de conducteur plat (4.2) et l'espace de réception de pièce de contact (4.6) pour le passage d'une pièce de contact électrique (6) s'étendant entre le logement de conducteur plat (4.2) et l'espace de réception de pièce de contact (4.6) à l'état monté, **caractérisé en ce que** l'espace de réception de pièce de contact (4.6) est décalé en hauteur par rapport au logement de conducteur plat (4.2), à savoir dans la direction de l'épaisseur de l'élément de boîtier (4).

2. Élément de boîtier (4) selon la revendication 1, **caractérisé par** un joint (7, 8) disposé sur l'élément de boîtier (4), qui à l'état monté entoure le logement de conducteur plat (4.2) et/ou l'ouverture traversante (4.8) de telle sorte que la pièce de contact (6) est disposée à l'intérieur du joint (7).

3. Élément de boîtier (4) selon la revendication 2, **caractérisé en ce que** le joint (7) est moulé par injection sur un matériau plastique de l'élément de boîtier (4).

4. Élément de boîtier (4) selon l'une des revendications précédentes, **caractérisé en ce que** l'ouverture traversante (4.8) est en forme de fente.

5. Élément de boîtier (4) selon l'une des revendications précédentes, **caractérisé en ce qu'**au moins une section de charnière (4.1) pour la connexion avec un couvercle de boîtier (5) est formée sur un côté du logement de conducteur plat (4.2) faisant face à l'espace de réception de pièce de contact (4.6).

6. Élément de boîtier (4) selon l'une des revendications précédentes, **caractérisé en ce qu'**au moins une section de fixation (4.3) pour le clipsage avec un couvercle de boîtier (5) est formée sur un côté du logement de conducteur plat (4.2) faisant face à l'espace de réception de pièce de contact (4.6).

7. Agencement de conducteurs électriques (1) pour un véhicule, avec au moins un rail conducteur plat dimensionnellement stable (2) en tant que conducteur de masse ou d'alimentation, avec un élément de boîtier (4) prévu comme base de boîtier avec un logement de conducteur plat (4.2) s'étendant dans une première direction (L) et entourant le rail conducteur plat (2), avec une bride de connecteur (4.5) s'étendant dans une deuxième direction (Q) perpendiculaire à la première direction (L), séparée en outre du logement de conducteur plat (4.2) par une paroi (4.7) et ayant un espace de réception de pièce de contact interne (4.6) décalé en hauteur par rapport au logement de conducteur plat (4.2), à savoir dans la direction de l'épaisseur de l'élément de boîtier (4), avec une ouverture traversante (4.8) disposée dans la paroi (4.7), qui relie le logement de conducteur plat (4.2) et l'espace de réception de pièce de contact (4.6) et à travers laquelle une pièce de contact électrique (6) est guidée, ce pièce de contact électrique (6) est connectée au rail conducteur plat (2) et s'étendant entre le logement de conducteur plat (4.2) et l'espace de réception de pièce de contact (4.6), et avec un couvercle de boîtier (5) articulé à l'élément de boîtier (4) via une section de charnière (4.1) disposée sur un côté du logement de conducteur plat (4.2) faisant face à l'espace de réception de pièce de contact (4.6).

8. Agencement de conducteurs électriques (1) selon la revendication 7, **caractérisé en ce que** l'élément de boîtier (4) et/ou le couvercle de boîtier (5) comporte au moins un joint (7, 8) entourant le logement de conducteur plat (4.2) et/ou l'ouverture traversante (4.8) de telle sorte que la pièce de contact (6) est disposée à l'intérieur du joint (7, 8).
